# EUROPEAN PATENT APPLICATION

(11) **EP 4 560 786 A1**
(43) Date of publication of application: **28.05.2025**
(21) Application number: 24213861.8
(22) Date of filing: 19.11.2024
(51) Int. Cl.: H01M 10/613

(54) **VEHICULAR BATTERY PACK AND RELATED ROAD VEHICLE**

(30) Priority: 21.11.2023 IT 202300024633
(71) Applicant: FERRARI S.p.A., 41100 Modena (IT)
(72) Inventor: POGGIO, Luca, 41100 MODENA (IT); LIGABUE, Elena, 41100 MODENA (IT); VENTURI, Enrico, 41100 MODENA (IT); HAMZAJ, Ledjan, 41100 MODENA (IT)
(74) Representative: Studio Torta S.p.A.

(57) **Abstract**

A vehicular battery pack (9) comprising: a plurality of battery modules (11) arranged adjacent to each other to form the battery pack (9), which mainly extends along a longitudinal axis; a cooling system (16) comprising at least one inlet conduit (17) for feeding a refrigerant fluid (F) and an outlet conduit (18) for the refrigerant fluid (F); the cooling system (16) comprising a plurality of refrigerant panels (20) fluidically connected to each other and configured to be at least partially flown through by at least part of the refrigerant fluid (F); wherein each battery module (11) comprises a respective refrigerant panel (20); wherein each battery module (11) comprises at least one hydraulic connection element (21) mounted on board the respective panel and fluidically connecting the respective refrigerant panel (20) and at least one refrigerant panel (20) of an adjacent battery module (11).

## Description

### CROSS-REFERENCE TO RELATED APPLICATIONS

This patent application claims priority from Italian patent application no. 102023000024633 filed on November 21, 2024, the entire disclosure of which is incorporated herein by reference.

### TECHNICAL FIELD

The invention concerns the field of energy storage systems for the automotive industry and, in particular, it relates to a vehicular battery pack with a modular cooling system and to a road vehicle comprising said battery pack.

### PRIOR ART

A vehicle can be provided with one single electric motor or with several electric motors (in which case, the drive is a full electric drive) or it can be provided with one or more electric motors combined with a heat engine (in which case, the drive can be a full electric drive, a full heat drive or a hybrid drive).

The electric motor (or each electric motor) is mechanically connected to the drive wheels and is electrically connected to an electrical energy storage system, also known as battery pack, through the interposition of an electronic power converter.

An electrical energy storage system generally consists of two groups of electrochemical cells, also known as modules, connected to one another in series (in order to increase the total electrical voltage) or in parallel.

Known electrical energy storage systems often have large dimensions and great weights (especially in case of a full electric drive, in which the electrical energy storage system can weigh more than 500 kg).

In modern vehicles, in fact, the electrical energy storage system has a flat and (relatively) thin conformation so that it can be integrated in the floorboard of the road vehicle. In this arrangement, the electrical energy storage system, once it has been assembled, comprises a container having a lower wall (which constitutes the bottom of the vehicle facing the road surface), an upper wall and a side wall, which is perpendicular to the lower and upper walls and connects the lower and upper walls to one another. Inside the container there are the different modules, usually prismatic or with "pouch" cells.

The battery modules usually available in the market (not only in the automotive industry, but also in consumer electronics) often consist of planar pouch batteries, which have a much more limited thickness compared to the other dimensions. There are two very large opposite faces (through which heat is dissipated almost entirely) and four oblong narrow sides, wherein the positive and negative terminals of the cell are arranged on one side or on two opposite sides.

In detail, a known electrical energy storage system for an electric vehicle comprises a battery pack consisting of a plurality of battery modules electrically connected to one another. Each battery module comprises, in turn, a large support structure (usually consisting of six metal side walls that are closed so as to form a parallelepiped), which delimits a plurality of electrochemical cells electrically connected to one another in series and/or in parallel.

Usually, in order to avoid inconvenient phenomena commonly known as "*gassing",* namely formation of gas inside the single cells due, for example, to the oxidation of the electrolyte or to the chemical decomposition thereof (often increased by phenomena such as cell overheating or overload), the cell are maintained in a constant compression state. According to the prior art, this compression is provided by the support structure (namely, by the side walls) of each battery module, which is configured to compress the cells perpendicularly to the large opposite faces. This compression is provided, for example, by stiffening the support structure and by making sure that at least two metal walls act as tie rods in the compression. As a consequence, each battery module usually is pre-assembled and subsequently installed in the container described above.

Furthermore, lithium-ion batteries, which are usually used in the automotive industry, are known to be very sensitive to temperature. It is also known that the production of energy from an electrochemical process inevitably causes the temperature of the cell to rise and that too high temperatures can adversely affect the behaviour and degradation of the cells to a significant extent. In fact, electrochemical cells begin to degrade rapidly when overheated, with a consequent impact on the performance and safety of the battery pack. In these cases, in addition to malfunction and breakage, there is also the risk of uncontrolled thermal events (thermal runway).

It is therefore important, for an optimal operation of the cell, to ensure adequate heat dissipation inside the battery pack.

This dissipation usually takes place by placing the aforementioned modules in contact with a refrigerated panel. In other words, inside the aforementioned container there is installed a refrigerated panel, through which a refrigerant fluid flows and on which the modules, electrically connected to one another, are installed. In this way, the refrigerated panel, in contact with one of the side walls of each module, dissipates the heat emitted by the electrochemical cells and transmitted to the wall interposed between them and the refrigerated panel.

This involves, especially in high-performance vehicles such as sports car, a significant mass associated with limited spaces available for the storage system, namely for the battery pack. Furthermore, pre-assembling times for each battery module have to be added to the normal installation of the battery modules on board the refrigerated panel.

However, the systems discussed above do not offer an exhaustive solution to the problem of heat dissipation.

Liquid cooling usually is the most performing solution capable of ensuring the stability of the thermal conditioning of the battery, but - as already mentioned - it is a relatively complex, heavy and especially cumbersome system (parameters that are particularly important in the case of high-performance vehicles).

Finally, known cooling systems are usually designed in a specific manner upon variation of the model and the size/capacity of the battery pack, with all the disadvantages that this entails in the procurement of components and in the construction and assembly thereof.

Owing to the above, the cooling of the cells needs to be improved, thus simplifying and, hence, facilitating the assembly thereof and reducing the weight thereof.

### DESCRIPTION OF THE INVENTION

The object of the invention is to provide a vehicular battery pack and a related road vehicle, which are at least partially free from the drawbacks described above and, at the same time, are simple and economic to be manufactured.

According to the invention, there are provided a vehicular battery pack and a related road vehicle as claimed by the independent claims attached hereto and, preferably, in any one of the dependent claims directly or indirectly depending on the independent claims.

The appended claims describe preferred embodiments of the invention and form an integral part of the description.

### BRIEF DESCRIPTION OF THE DRAWINGS

The invention will now be described with reference to the accompanying drawings, which show some non-limiting embodiments thereof, wherein:
- figure 1 is a schematic plan view of an electric vehicle comprising a battery pack according to the invention;
- figure 2 is a schematic perspective view of the battery pack of figure 1;
- figure 3 is a partially exploded schematic perspective view of the battery pack of figure 2 showing different modules of the battery pack in position before they are assembled;
- figures 4 and 5 are schematic and perspective left and right views, respectively, of a module of the battery pack of the preceding figures;
- figure 6 is a partially exploded schematic perspective view of the module of the battery pack of figures 4 and 5;
- figure 7 is a side view of figure 3; and
- figure 8 is a side view of figure.

### PREFERRED EMBODIMENTS OF THE INVENTION

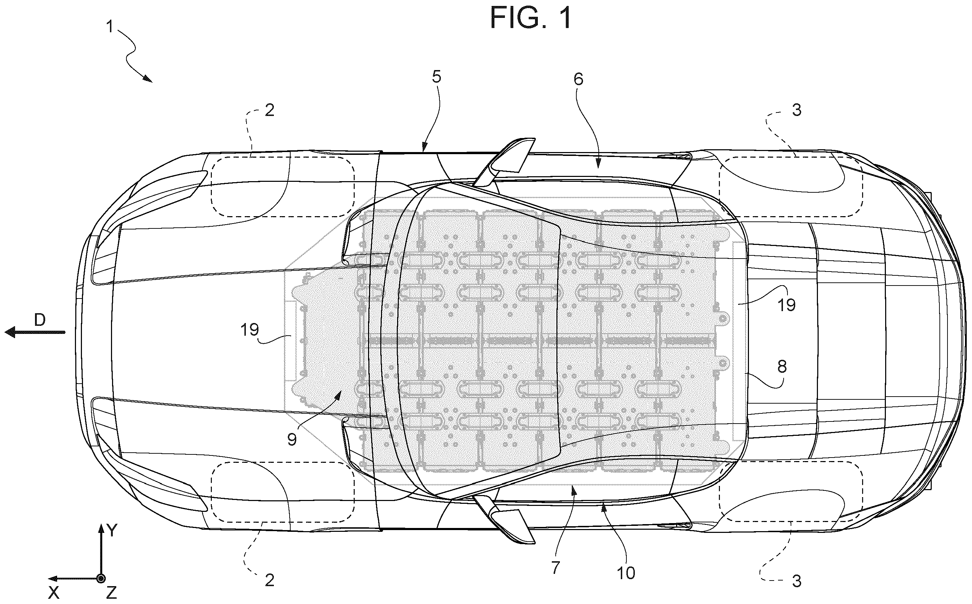

In figure 1, number 1 indicates, as a whole, a road vehicle provided with two front wheels 2 and two rear wheels 3, at least a pair (or all) of them receiving the torque from a powertrain system 4.

The road vehicle 1 is an at least partially electric vehicle (namely, a hybrid or full electric vehicle). In other words, the powertrain system 4 can be a hybrid system (namely, comprising an internal combustion heat engine and at least one electric motor) or an electric system (namely, solely comprising one or more electric motors).

In the figures, the same numbers and the same reference letters indicate the same elements or components with the same function.

For the purposes of the invention, the term "second" component does not imply the presence of a "first" component. As a matter of fact, these terms are only used as labels to improve clarity and should not be interpreted in a limiting manner.

The elements and features contained in the different preferred embodiments, drawings included, can be combined with one another, without for this reason going beyond the scope of protection of this patent application, as described hereinafter.

The road vehicle 1 further comprises a body 5 defining a passenger compartment 6, which is configured to accommodate at least a driver and, if necessary, one or more passengers. The passenger compartment 6 defines at least one cockpit 7 for the driver.

Hereinafter, expressions such as "at the top", "at the bottom", "at the front", "at the back" and others similar to them are used with reference to normal travel conditions of the vehicle 1 along the normal travel direction D.

As shown in the non-limiting embodiment of figure 1, it is further possible to define:
- a longitudinal axis X integral to the vehicle 1 and, in use, horizontal and parallel to a normal travel direction D of the vehicle 1;
- a transverse axis X integral to the vehicle 1 and, in use, horizontal and orthogonal to the axis X; and
- a vertical axis Z integral to the vehicle 1 and, in use, vertical and orthogonal to the axes X, Y.

The road vehicle 1 comprises a vehicular frame 8, which supports the body 5.

Furthermore, the road vehicle 1 comprises a vehicular battery pack 9 fitted to the frame 8 under the passenger compartment 6, in particular in the area of a floorboard 10 of the road vehicle 1 (namely, a vehicular bottom, which delimits the road vehicle 1 on the lower side).

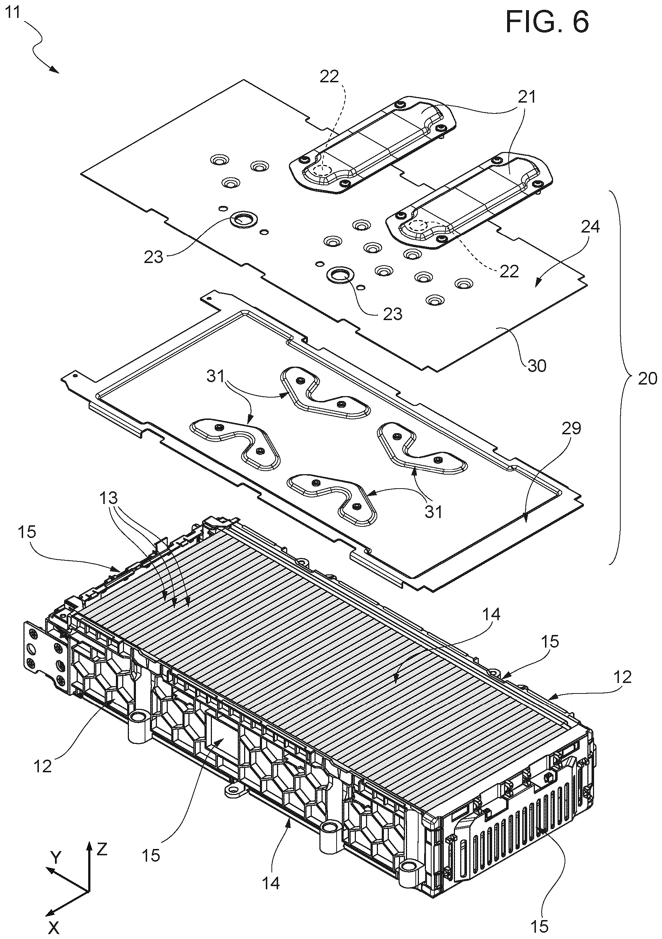

The battery pack 9 comprises a plurality of battery modules 11, each of which comprises a support structure 12 (preferably box-like, as shown in the accompanying figures) and a group of electrochemical cells 13, as shown in figure 6 (of a known type, for example pouch cells, and therefore not further detailed). The electrochemical cells 13 are at least partially, in particular totally delimited by the support structure 12. In other words, the support structure 12 contains the electrochemical cells 13.

Preferably, though not in a limiting manner, the box-like support structure 12 comprises a pair of opposite main walls 14, between which two pairs of secondary walls 15 extend, in particular perpendicularly. In detail, the main walls 14 have a larger surface than the secondary walls.

In particular, especially in the case of pouch cells 13, one of the pairs of secondary walls 15 also deals with the radial compression of the planar pouch cells 13 (known practice and therefore not further detailed below).

The battery modules 11 preferably are all the same and are arranged adjacent to one another to form the battery pack 9, which mainly extends along the longitudinal axis X.

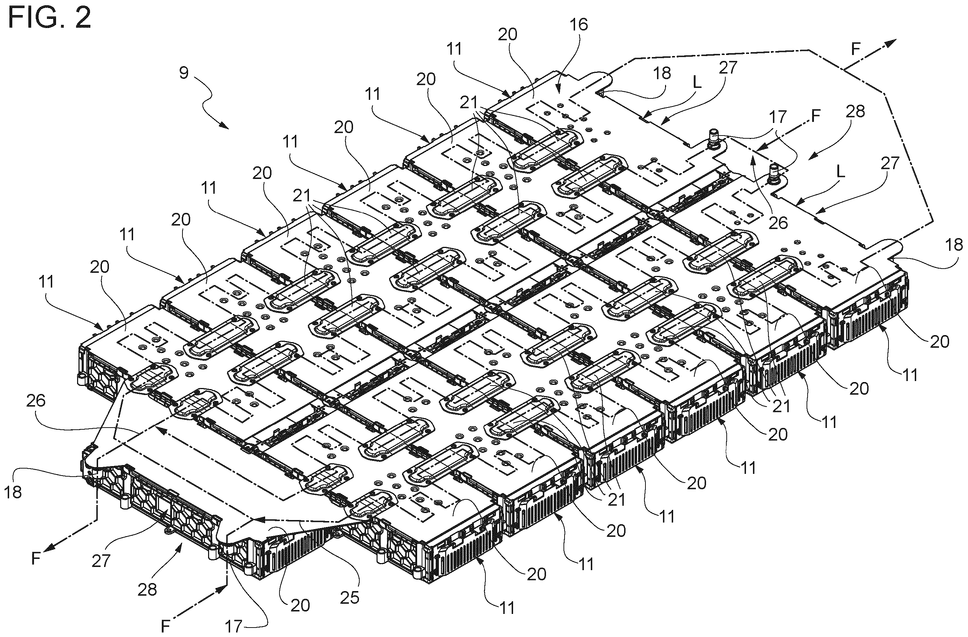

Advantageously, the battery pack comprises a cooling system 16 comprising at least one inlet conduit 17 for feeding of a refrigerant fluid F and an outlet conduit 18 for the refrigerant fluid F. By way of example, some preferred, though non-limiting paths of the refrigerant fluid F are shown in figure 2.

In particular, the vehicle 1 further comprises a circulation system 19 for the refrigerant fluid F configured to introduce said saturated fluid F into said at least one inlet conduit 17 and to extract it, when it is exhausted, from the outlet conduit 18 for the refrigerant fluid F. The circulation system is of the known kind and, therefore, will not described in detail hereinafter.

In particular, the circulation system comprises two inlet conduits 17 and two outlet conduits 18 respectively arranged on a same side of the battery pack 9, along the longitudinal axis. On the other hand, on the opposite side, the battery pack exclusively comprises an inlet conduit 17 and an outlet conduit 18.

Advantageously, as shown in the embodiments of the accompanying figures, the cooling system 16 comprises a plurality of refrigerant panels 20, which are fluidically connected to one another and are configured to be at least partly flown through by at least part of the refrigerant fluid F.

In particular, each battery module 11 comprises a respective refrigerant panel 20. This feature simplifies assembly by pre-assembling each single module, hence without having to share a panel between several battery modules. Indeed, in this case, several modules would be fitted to the same panel, reducing the scalability of the battery pack 9.

Furthermore, each battery module 11 comprises at least one hydraulic connection element 21 mounted on board the respective panel 20 and fluidically connecting the respective refrigerant panel 20 to at least one refrigerant panel 20 of an adjacent battery module 11.

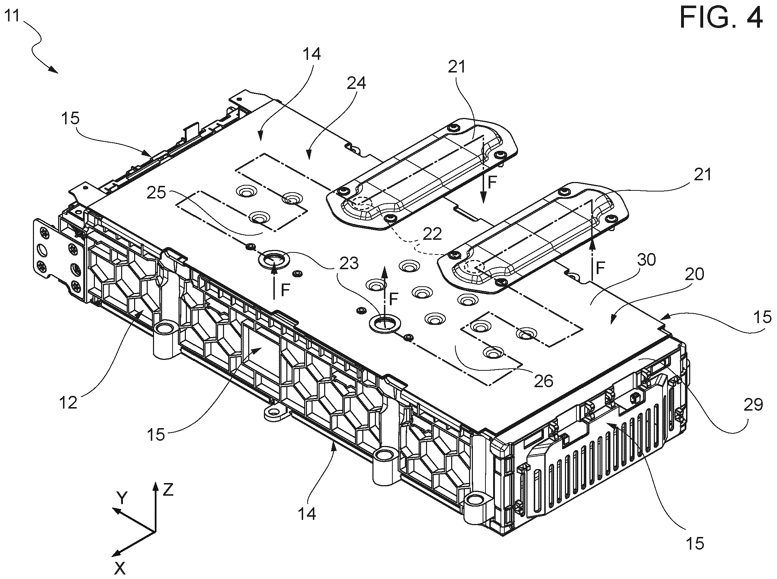

In particular, as shown in figures 4 to 6, each battery module 11 comprises at least two hydraulic connection elements 21 between the respective refrigerant panel 20 and that of one or more adjacent battery modules 11.

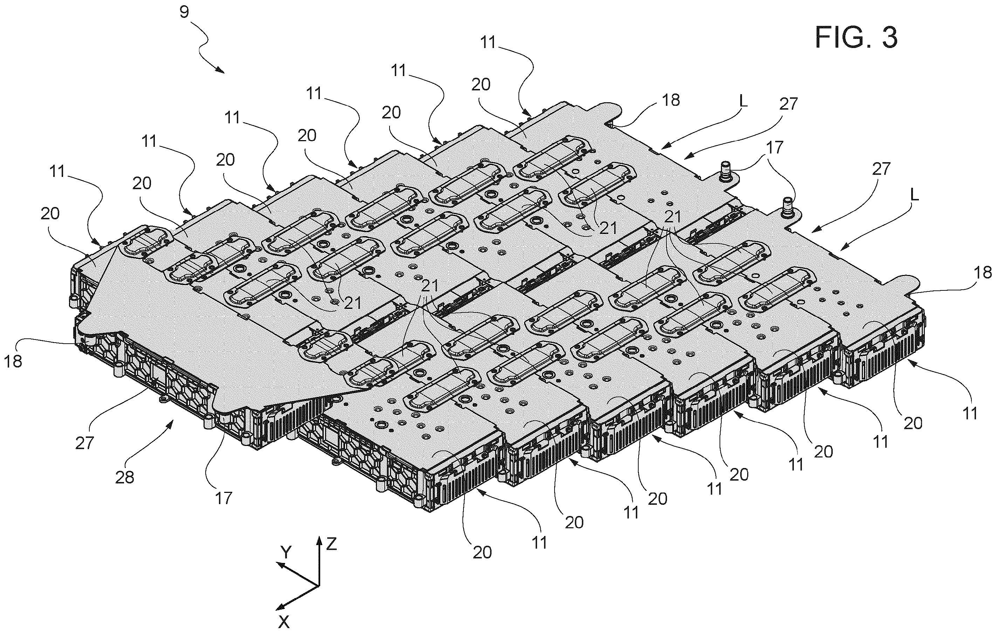

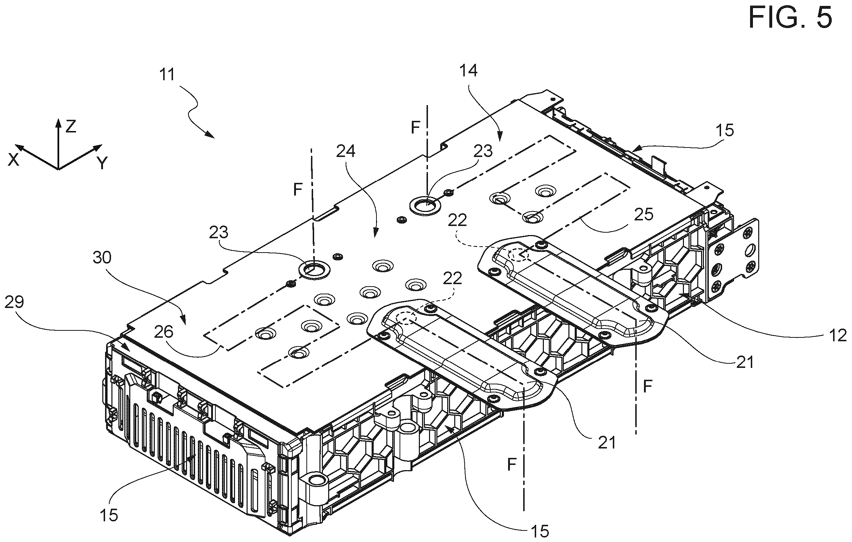

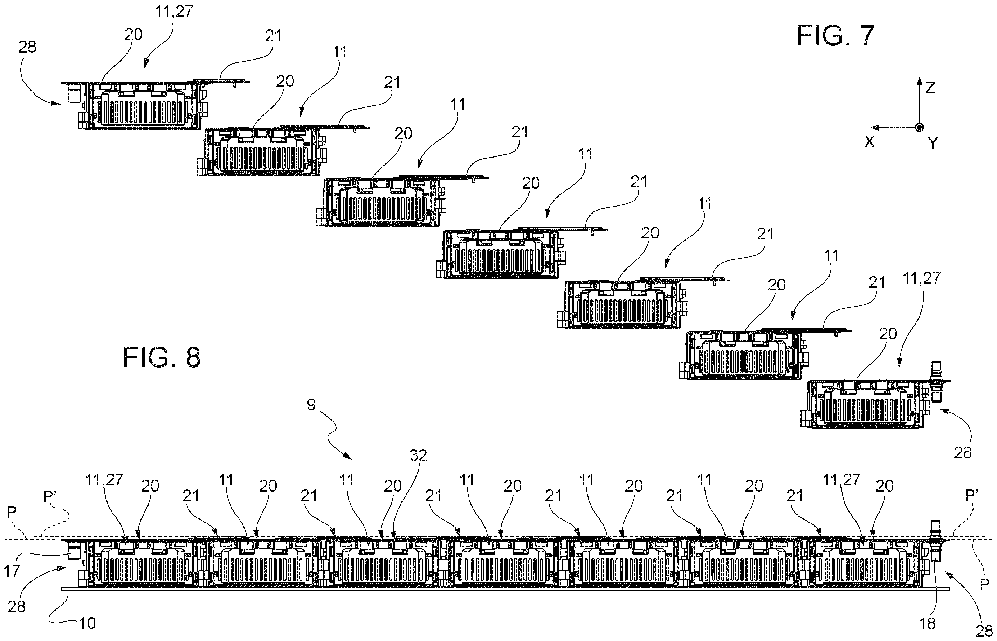

According to the embodiments of figures 3-7, in order to permit a cascade arrangement, each battery module comprises two hydraulic connection elements 21, wherein from one of them the refrigerant fluid F flows into the panel 20, while from the other one the refrigerant fluid F flows out of the panel (as shown by the arrows of figures 4 and 5). In other words, a first hydraulic connection element 21 is configured to introduce at least part of the refrigerant fluid F into the respective panel 20 and a second hydraulic connection element 21 is configured to extract at least part of the refrigerant fluid F inside the respective panel 20.

Preferably, though not in a limiting manner, the first and the second connection elements 21 are arranged parallel to one another and protrude from a same side of the refrigerant panel 20.

Advantageously, but not in a limiting manner, each refrigerant panel 20 comprises a pair of first openings 22, which connect the inside of the refrigerant panel 20 to the first and to the second connection element 21, respectively, of the battery module 11 and a pair of second openings 23, which connect the inside of the refrigerant panel 20 to the first and to the second connection element 21, respectively, of the adjacent battery module 11.

In particular, the first openings 22 and the second openings 23 are located on a same upper face 24 of the refrigerant panel 20, namely the one facing away from the cells 13, hence facing the passenger compartment 6 in the embodiment of the accompanying figures.

Advantageously, though not in a limiting manner, the combination of the refrigerant panels 20 and of the hydraulic connection elements 21 defines a delivery circuit 25 and a return circuit 26 for the refrigerant fluid F. In particular, not in a limiting manner, the return circuit 26 is surrounded by the delivery circuit 25.

According to the embodiments of figures 1, 2 and 8, the set of refrigerant panels 20 is arranged on a same first plane P. In other words, the refrigerant panels 20 are coplanar to one another.

In particular, advantageously, though not in a limiting manner, the hydraulic connection elements 21 are interposed between adjacent refrigerant panels 20 on a second plane P' other than the first plane P (in particular, parallel to the first plane P, preferably higher than the first plane P), namely on the side opposite the battery modules 11 with respect to the first plane P, namely the plane on which the refrigerant panels 20 lie.

Alternatively, the battery pack 9 could be upside-down, by placing the refrigerant panels 20 and the connection elements 21 at the bottom, towards the possible ground on which the road vehicle 1 stands, with respect to the battery modules 11.

Hence, in general, the refrigerant panels 20 (together with the connection elements 21, if necessary) define an outer wall of the battery pack 9, for they are arranged at an upper or lower end with respect to the set of battery modules 11. In other words, the first plane P, namely the set of refrigerant panels 20, is not interposed between battery modules 11.

Preferably, the hydraulic connection elements 21 form a raised fluidic bridge between adjacent refrigerant panels 20.

In particular, the hydraulic connection elements 21 are all arranged on a same side of the first plane P, namely they are always arranged externally. In this way, it is possible to maximize the occupation of the space under or above the refrigerant panels 20, without necessarily obtaining a channel for housing the connection elements 21.

In the non-limiting embodiments of the accompanying figures, the battery modules 11 and, hence, the refrigerant panels 20 are mainly arranged along two parallel rows L. In other non-limiting embodiments which are not shown herein, the battery modules 11 and, hence, the refrigerant panels 20 are arranged along one single row or more than two rows.

In particular, advantageously, though not in a limiting manner, the hydraulic connection elements 21 are interposed between adjacent refrigerant panels 20 along a direction parallel to the longitudinal axis X of the road vehicle, more in particular, all of them parallel to one another.

As shown in the non-limiting embodiment of figure 6, each refrigerant panel 20 defines by itself a wall of the support structure 12, in particular main walls 14 (i.e. having a larger extension) of the support structure, more in particular, not in a limiting manner, the wall 14 arranged in the area of the upper (or anyway outer) face 24. In particular, therefore, the refrigerant panel 20 defines the upper closure of the box-like support structure 12, thus making it possible to eliminate one of the walls of the support structure 12, which, according to the prior art comprises, six different faces, one of which rests against a cooling system. In this way, it is possible to lighten the battery pack 9 and reduce the overall dimensions thereof. Hence, in particular, the refrigerant panel 20 defines one of the six walls of the box-like support structure. In this way, the dimensions and weights of each module are limited, thus allowing the active part (electrodes, electrolyte, current collector, etc.) to be maximized.

Preferably, though not in a limiting manner, in each module 11, the refrigerant panel 20 is arranged transversely to the plurality of electrochemical cells 13. In particular, the refrigerant panels 20 are arranged along a horizontal plane XY, while the electrochemical cells 13 can be arranged along vertical planes, for example, relative to the aforementioned axes, YZ or XZ.

Preferably, though not in a limiting manner, the battery pack 9 comprises at least two extreme battery modules 27, which are arranged at the ends 28 of the battery pack along the longitudinal axis X of the battery pack 9. In particular, the extreme modules 27 are fluidically connected to the inlet conduit 17 for feeding the refrigerant fluid F and to the outlet conduit 18 for the refrigerant fluid F.

Preferably, though not in a limiting manner, in order to simplify assembly by reducing the number of elements and, at the same time, guarantee the strength of the battery pack 9, the refrigerant panels 20 are made of metal, in particular aluminium.

According to the preferred, though non-limiting embodiment of figure 6, each refrigerant panel 20 comprises an inner element 29 and an outer element 30, which are coupled to one another and both have a substantially planar shape. The inner element 29 and the outer element 30 are configured to generate, between them, a chamber/tank, inside which the refrigerant fluid F flows. In particular, the chamber/tank extends in a planar manner between the elements 30, 31, along the first plane P.

In particular, not in a limiting manner, the inner element 29 comprises deflector elements 31 for directing the refrigerant fluid F to and from the openings 22 and 23. More in particular, the deflector elements 31 are V-shaped so as to have, inside the concavity, one of the openings 22, 23. Preferably, the deflector elements 31 are protuberances that extend from the bottom of the chamber/tank preferably contained by the inner element 29.

Preferably, though not in a limiting manner, in order to simplify assembly by reducing the number of elements and, at the same time, guarantee the strength of the battery pack 9, the hydraulic connection elements 21 are made of metal, in particular aluminium.

In some preferred non-limiting cases, the hydraulic connection elements 21 are configured to inject and extract the refrigerant fluid F inside the respective refrigerant panel 20 along a direction that is transverse to the longitudinal axis X of the battery pack 9, in particular vertically (namely, along the axis Z).

Preferably, though not in a limiting manner, the set of refrigerant panels 20 form a planar cooling body 32, configured to be arranged towards the vehicular passenger compartment 6 relative to the rest of the battery pack 9. In this way, in addition to simplifying the assembly operations by sequentially laying the modules 11 on the floorboard 10 of the road vehicle 1, it is possible to exploit the properties of the air which, by cooling in contact with the planar body 32, tends to descend and make the cooling of the electrochemical cells 13 inside the battery pack 9 more efficient.

As indicated above, therefore, the modules 11 are configured to be connected in a cascade arrangement forming the cooling system 16.

In particular, the battery pack 9 is suited to be connected to the powertrain system 4 of the at least partially electric vehicle 1 and is designed to store the electrical energy produced by an electric machine (which is not shown herein). The battery pack 9 is connected to the electric machine through the interposition of a power converter (commonly known as inverter), which, based on the different needs of the electric machine and of the battery pack 9, transforms the direct current produced by the battery pack 9 into alternating current for the electric machine and vice versa.

The battery pack 9 comprises at least one section configured to house a battery management system - BMS designed to control the operating parameters electrochemical cells 13, measuring a plurality of parameters such as current intensity, voltage and temperature.

Even though the invention described above specifically relates to some precise embodiments, it should not be considered as limited to said embodiments, for its scope of protection also includes all those variants, changes or simplifications covered by the appended claims, such as for example a different shape of the battery pack, a different location thereof, a different type of materials, etc.

The invention offers many advantages.

First of all, it eliminates a wall of the metal containers, namely of the support structures, of the electrochemical cells, which determine an undesired increase in weight and dimensions.

Furthermore, as a consequence of said improved use of the space, larger-sized cells can be inserted in the same volume.

A further advantage of the invention lies in the possibility of facilitating the assembly of the battery pack by eliminating all the plastic and rubber components that normally are part of the cooling system and of its connection to the modules.

It is also possible to change the number of intermediate modules by varying the capacity and the size of the battery pack as desired, as the road vehicle model changes (for example, as the size of the floorboard changes).

In addition, by integrating the cooling system in the single modules, it can more easily be placed on the upper part of the battery pack.

Finally, the invention leads to a standardization of the hydraulic assembly, which is what already happens with the electrical one, allowing the battery modules to be connected to one another with simplicity and by carrying out repetitive operations.

### LIST OF THE REFERENCE NUMBERS OF THE FIGURES

- 1: vehicle
- 2: front wheels
- 3: rear wheels
- 4: powertrain system
- 5: body
- 6: passenger compartment
- 7: cockpit
- 8: frame
- 9: battery pack
- 10: floorboard
- 11: modules
- 12: support structure
- 13: cells
- 14: main walls
- 15: secondary walls
- 16: cooling system
- 17: inlet conduit
- 18: outlet conduit
- 19: circulation system
- 20: refrigerant panel
- 21: hydraulic connection element
- 22: first openings
- 23: second openings
- 24: upper face
- 25: delivery circuit
- 26: return circuit
- 27: extreme battery modules
- 28: ends
- 29: inner element
- 30: outer element
- 31: deflector elements
- 32: planar cooling body
- D: travel direction
- F: refrigerant fluid
- L: parallel rows
- P: first plane
- P': second plane
- X: longitudinal axis
- Y: transverse axis
- Z: vertical axis

## Claims

1. Vehicular battery pack (9) comprising
- a plurality of battery modules (11), each of which comprises a support structure (12) and a group of electrochemical cells (13) which are at least partially, in particular totally, delimited by the support structure (12) structure; the battery modules (11) being arranged adjacent to each other to form the battery pack (9), which extends mainly along a longitudinal axis (X);
- a cooling system (16) comprising at least one inlet conduit (17) for of a refrigerant (F) fluid and an outlet conduit (18) for the refrigerant (F) fluid;
the cooling system (16) comprising a plurality of fluidically connected refrigerant panels (20) configured to be at least partially cross-flowed by at least part of the refrigerant (F);
wherein each battery module (11) comprises a respective refrigerant panel (20);
wherein each battery module (11) comprises at least one hydraulic connection element (21) mounted on board the respective panel and fluidically connecting the respective refrigerant panel (20) and at least one refrigerant panel (20) of an adjacent battery module (11).

2. The battery pack (9) according to claim 1, wherein each battery module (11) comprises at least two hydraulic connection elements (21) between the respective refrigerant panel (20) and that of one or more adjacent battery modules (11); wherein a first hydraulic connection element (21) is configured to introduce at least part of the refrigerant (F) inside the respective panel and a second hydraulic connection element (21) is configured to extract at least part of the refrigerant (F) inside the respective panel.

3. The battery pack (9) according to any one of the preceding claims, wherein the combination of the refrigerant panels (20) and the hydraulic connection elements (21) defines an inlet circuit (25) and a return circuit (26) for the refrigerant (F).

4. The battery pack (9) according to any one of the preceding claims, wherein the assembly of the respective refrigerant panels (20) is arranged on a same first plane (P) .

5. The battery pack (9) according to claim 4, wherein the hydraulic connection elements (21) are interposed between adjacent refrigerant panels (20) on a second plane (P') different from the first plane (P), in particular by forming a raised fluidic bridge between adjacent refrigerant panels (20).

6. The battery pack (9) according to any one of the preceding claims, wherein each respective refrigerant panel (20) defines for itself a wall of the support structure (12), in particular a wall of a pair of main walls (14) of the support structure (12).

7. The battery pack (9) according to claim 6, wherein in each module (11), the refrigerant panel (20) is arranged transversely to the plurality of electrochemical cells (13).

8. The battery pack (9) according to any one of the preceding claims and comprising at least two extreme battery modules (27), which are disposed at the ends of the battery pack (9) along the longitudinal axis (X) of the battery pack (9) itself; wherein the extreme battery modules (11) are fluidically connected to the inlet conduit (17) of the refrigerant (F) fluid and to the outlet conduit (18) for the refrigerant (F) fluid.

9. The battery pack (9) according to any one of the preceding claims, wherein the hydraulic connection elements (21) are made of metal, in particular aluminium.

10. The battery pack (9) according to any one of the preceding claims, wherein the refrigerant panels (20) are made of metal, in particular aluminium.

11. The battery pack (9) according to any one of the preceding claims, wherein the hydraulic connection elements (21) are configured to inject and extract the refrigerant fluid (F) within the respective refrigerant panel (20) along a direction transverse to the longitudinal axis (X) of the battery pack (9), in particular vertically.

12. The battery pack (9) according to any one of the preceding claims, wherein the set of refrigerant panels (20) form a planar cooling body, configured to be disposed towards a vehicular cockpit (6) relative to the rest of the battery pack (9).

13. The battery pack (9) according to any of the preceding claims, wherein the battery modules (11) are configured to be cascaded forming the cooling system (16).

14. Road vehicle (1) comprising:
- four wheels, of which at least two are drive wheels;
- a passenger compartment (6) configured to accommodate at least one driver;
- an at least partly electrically driven power train configured to deliver drive torque to at least two drive wheels;
the road vehicle (1) being **characterised in that** it also comprises:
- a battery pack (9) according to any one of the preceding claims mounted inferiorly to the passenger compartment (6), in particular at a floor (10) of the road vehicle (1);
- a system (19) for circulating the refrigerant fluid (F) configured to introduce said fluid in a saturated state into the at least one inlet conduit (17) and to extract it unloaded from the outlet conduit (18) for the refrigerant fluid (F).
